# EUROPEAN PATENT APPLICATION

(11) **EP 2 960 494 A1**
(43) Date of publication of application: **30.12.2015**
(21) Application number: 15170729.6
(22) Date of filing: 04.06.2015
(51) Int. Cl.: F03D 11/00

(54) **WIND POWER GENERATOR SYSTEM**

(30) Priority: 27.06.2014 JP 2014132011
(71) Applicant: Hitachi, Ltd., Tokyo 100-8280 (JP)
(72) Inventor: FUNABASHI, Shigehisa, Chiyoda-ku, Tokyo 100-8280 (JP); KUSUNO, Nobuhiro, Chiyoda-ku, Tokyo 100-8280 (JP); INAMURA, Shingo, Chiyoda-ku, Tokyo 100-8280 (JP); TOBINAGA, Ikuo, Chiyoda-ku, Tokyo 100-8280 (JP)
(74) Representative: Moore, Graeme Patrick

(57) **Abstract**

A high-reliability wind power generator system in which risk of corrosion is reduced is provided.

In order to achieve the above-mentioned object, a wind power generator system comprises a nacelle adapted to rotate according to a direction of wind, and a tower rotatably supporting the nacelle. A space between the nacelle and the tower is separated from high pressure zones that are generated at a connection portion between the nacelle and the tower and on the windward side of the tower.

## Description

### FIELD OF THE INVENTION

The present invention relates to a wind power generator system and, more particularly, to a wind power generator system whose interior is protected from corrosion.

### BACKGROUND OF THE INVENTION

Generally, a wind power generator system has a structure in which a nacelle that supports, via a main shaft, a rotor rotated by a blade, is provided at an upper part of a tower. A generator that is rotated by rotation of a main shaft of the blade is often provided in an interior of the nacelle. However, a wind power generator system may employ a structure in which in order to obtain an optimum number of revolutions of the generator, a speed increaser is disposed between a rotor and the generator, to thereby increase the number of revolutions . Electric energy that is generated by the generator is converted, via a power converter and a transformer, into electric power that can be supplied to an electric power system.

Devices such as a generator, a speed increaser, a control unit, a power converter, and a transformer, are built into a wind power generator system. Loss of the devices is produced as heat. Therefore, a cooling system that radiates the generated heat and allows the devices to be operated at an optimum temperature is required. Eventually, systems that use radiators and fans for radiating the heat to the atmosphere or water outside the wind power generator system are often employed.

Even in a wind power generator system having such a cooling system, air in the interior of a nacelle is heated by solar radiation and radiation of heat from surfaces of devices such as a generator and a speed increaser. Therefore, a system that introduces outside air and performs ventilation-cooling is also employed. For example, Patent Literature 1 discloses a structure which introduces outside air in order to cool the interior of a tower of a wind power generator system. Moreover, Patent Literature 2 discloses a structure in which adjustment of a quantity of ventilating wind, such as prevention of excessive cooling of the interior of a nacelle by provision of an exhaust port at a negative pressure generating zone on a side surface of the nacelle, is taken into consideration.

### Citation List

### Patent Literature

Patent Literature 1: Japanese Patent Application Laid-Open Publication No. 2012-13002
Patent Literature 2: Japanese Patent Application Laid-Open Publication No. 2010-31722

When a nacelle is rotatably provided with respect to a tower, a space is created at a connection portion between the nacelle and the tower. A quality of air entering a wind power generator system via this space and the like considerably affects reliability. Particularly, in an offshore wind power generator system to be spread in the future, air outside the wind power generator system may contain high humidity and also contain a lot of salt, with high probability. If such air is introduced into the interior of the wind power generator system without being subjected to any treatment, risk of corrosion to a generator, a power converter, and a control unit which are installed in the interior will be increased.

It is, therefore, an object of the present invention to provide a high-reliability wind power generator system in which risk of corrosion is reduced.

### SUMMARY OF THE INVENTION

In order to address the above-mentioned problem, a wind power generator system according to the present invention comprises a nacelle adapted to rotate according to a direction of wind, and a tower rotatably supporting the nacelle, and a space between the nacelle and the tower is separated from high pressure zones that are generated at a connection portion between the nacelle and the tower and on the windward side of the tower.

In accordance with the present invention, it is possible to provide a high-reliability wind power generator system in which risk of corrosion is reduced.

### BRIEF DESCRIPTION OF THE DRAWINGS

Fig. 1 is a schematic view showing a wind power generator system of a first embodiment that is offshore installed;
Fig. 2 is a schematic side view of a nacelle part of the wind power generator system according to the first embodiment;
Fig. 3 is a schematic horizontal plane view of the nacelle part of the wind power generator system according to the first embodiment;
Fig. 4 is a schematic side view of a nacelle part of a wind power generator system according to a second embodiment; and
Fig. 5 is a schematic side view of a nacelle part of a wind power generator system according to a third embodiment.

### DETAILED DESCRIPTION OF THE PREFERRED EMBODIMENTS

Embodiments of the present invention will be explained hereinafter with reference to the drawings.

### First Embodiment

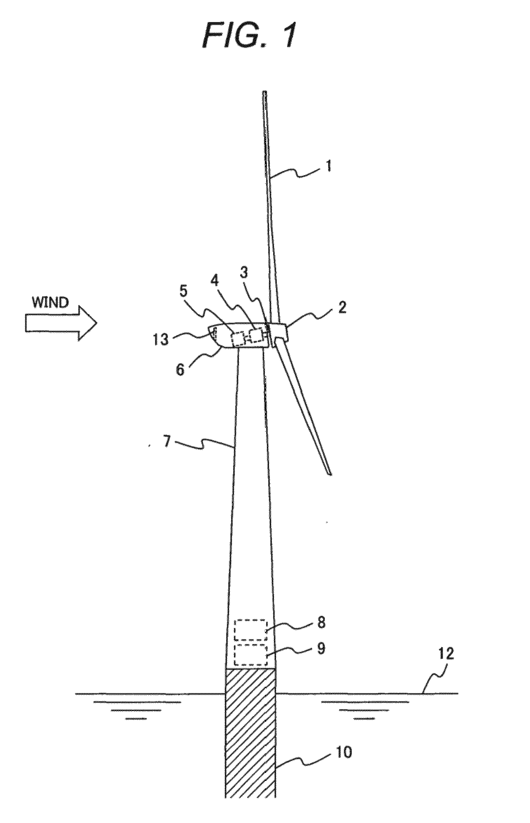

Referring to Figs. 1-3, a first embodiment is explained. Fig. 1 shows a schematic view of a wind power generator system of the first embodiment which is offshore installed. In the wind power generator system of this embodiment, a nacelle 6 is rotatably arranged at a top part of a tower 7 which is installed so as to project above the ocean surface from underwater. The nacelle 6 axially supports a rotor 2 that includes a blade 1 and a hub (not shown). The rotor 2 is connected, via a main shaft 3 and a speed increaser 4, to a generator 5. The speed increaser 4 and the generator 5 are disposed in the nacelle. The generator 5 is connected, via a power cable (not shown), to electrical devices, such as a power converter 8 and a transformer 9, which are built into a lower part of the tower 7. The nacelle 6 and the tower 7 communicate with each other.

In the wind power generator system, the nacelle 6 is adapted to rotate (yaw control) according to a direction of wind in such a manner to direct a rotation surface of the rotor 2 toward the direction of wind, the blade 1 receives power by energy of the wind, and the rotor 2 is rotated. The rotation of the rotor 2 whose number of revolutions is increased to an optimum number of revolutions through the speed increaser 4 is transmitted to the generator 5. Electrical energy that is produced by the rotation of the generator 5 is rectified by the power converter 8, and is regulated in voltage by the transformer 9 and transmitted to an electric power system. At this time, in the generator 5, the power converter 8, the transformer 9 or the like, heat is generated due to loss produced when an electric current flows. Moreover, also in the speed increaser 4, loss is generated as heat.

In the wind power generator system according to this embodiment, a water cooling system is employed for cooling the generator 5 and the speed increaser 4. That is, a coolant is circulated between the generator 5 and the speed increaser 4, and a radiator 13 by a pump, and heat that is deprived in the generator 5 and the speed increaser 6 is radiated to the atmosphere by the radiator 13 installed at an upstream part of the nacelle 6, whereby cooling is performed.

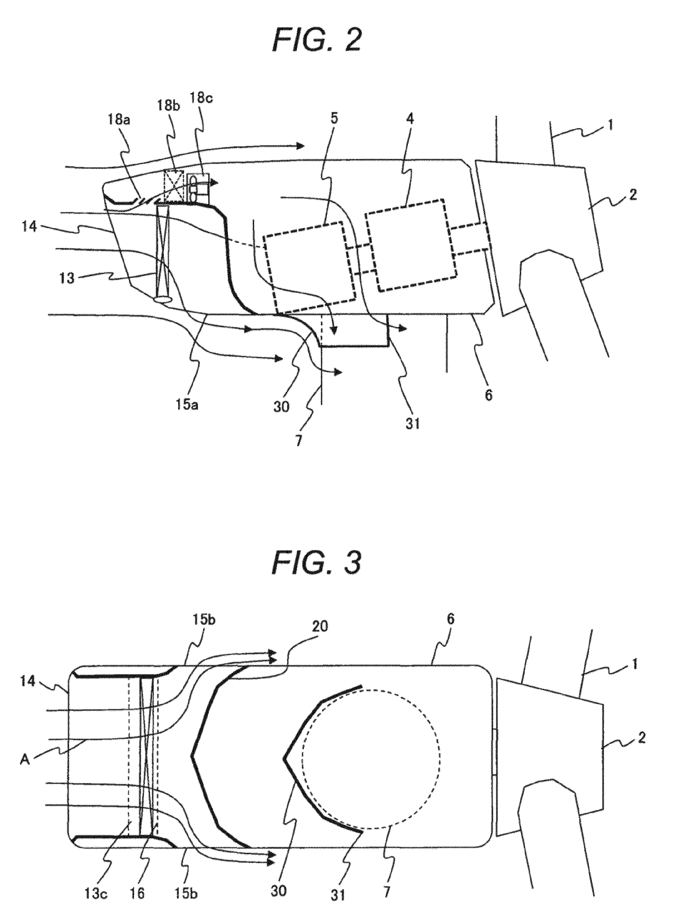

Fig. 2 shows a schematic side view of a part of the nacelle 6 of the wind power generator system according to the first embodiment. Wind blows from the left side to the right side in Fig. 2, and the nacelle 6 receives the wind from a side opposite to a side on which the blade 1 is installed. That is, the wind power generator system is of a downwind-type in which the blade 1 is located on the downstream side of the tower 7. Concretely, the radiator 13 is installed on the windward side of the nacelle 6 in such a manner that a suction surface thereof is directed to the windward direction. A coolant which cools heat accumulated in the generator 5, the speed increaser 4, or the nacelle 6, and whose temperature becomes a high temperature due to the heat generated there flows into the radiator 13, by which the heat is radiated to the atmosphere.

On the windward side of the radiator 13, an inlet port 14 that is opened so as to directly receive natural wind is provided. On the leeward side of the radiator 13, a passage that is configured so as to guide a flow of air, passing through the radiator, toward a downward direction of the nacelle 6, is provided. An exhaust port 15a that is an outlet of the passage that allows the air to flow out to the outside is provided in the downward direction of the nacelle 6. The radiator 13 is installed so as to be opposed to the wind inflowing thereinto. The wind that passes between fins of the radiator 13 is introduced to the exhaust port 15a.

On the upstream side of the radiator 13 disposed on the windward side of the nacelle 6, an outside air introducing port 18a that introduces outside air into the nacelle 6 and ventilates the nacelle is provided. On the leeward side of the outside air introducing port 18a, a filter 18b that removes salt is provided. Moreover, on the leeward side of the outside air introducing port 18a, an outside air introducing system 18 that is composed of a fan 18c is provided. Cooling of the generator 5 and the speed increaser 4 that are arranged in the nacelle 6 is performed through the radiator 13. However, heat is radiated from surfaces of the generator 5 and speed increaser 4, and also from bearings disposed inside the nacelle and other electrical devices (a control panel and the like (not shown)), which provides a cause of increasing ambient temperature in the nacelle 6. In order to reduce the temperature in the nacelle 6, it is effective to introduce outside air of a low temperature into the nacelle 6 and facilitate ventilation of the nacelle. Incidentally, an outside air introducing means of this embodiment comprises the outside air introducing port 18a that is provided on the windward side of the nacelle 6 to communicate with the interior and exterior of the nacelle 6. To create a flow of air by compulsorily introducing air, that has been subjected to cleaning via the filter 18b removing salt, into the nacelle 6 leads to an increase in static pressure in the interior of the nacelle 6, whereby it is possible to also anticipate an effect that outside air that has not been subjected to cleaning will be prevented from entering the nacelle from a micro space that is unintentionally formed. The position of the outside air introducing means is not particularly limited. However, if it is provided on the windward side, it is possible to use wind pressure, so that arranging of the outside air introducing means on the windward side is preferable. In this case, it is also possible to omit or miniaturize a fan provided at the outside air introducing means. Moreover, it is desirable that, for corrosion protection, the outside air introducing means is used together with the filter that removes salt, as described above.

A space that allows relative rotation of the nacelle 6 and the tower 7 in order that the orientation of the rotor 2, namely, the orientation of the nacelle 6 is directed toward the direction of wind and 360 degree adjustment is performed by the yaw control is present at a connection portion between the nacelle 6 and the tower 7. Air which has been introduced from the outside through the outside air introducing port 18a flows out of the nacelle 6 from this space. A cover 30 which is formed as a separate component with respect to the nacelle 6 is connected to the lower part of the nacelle 6, is disposed on the windward side of the tower 7, and covers the space between the nacelle 6 and the tower 7. Another space is present between the rotor 2 and the nacelle 6. Air flows to the outside also from this space.

Fig. 3 is a schematic horizontal plane view of the part of the nacelle 6 of the wind power generator system according to the first embodiment. Although the cover 30 is disposed so as to cover an upstream side of the tower 7, an end portion 31 of the cover 30 on the downstream side is cut out on a lateral side of the tower 7 with respect to the direction of wind, where a space between the cover 30 and the tower 7 is present. The cover does not cover the leeward side, so that the outside air introducing port 18a and the space between the nacelle 6 and the tower 7 communicate with each other. Therefore, the interior of the nacelle can be ventilated and cooled by outside air inflowing from the outside air introducing port 18a, and the outside air introducing port 18a can also serve as an exhaust port.

The operation and effect of the cover 30 by which the present invention is characterized will be described hereinafter.

Wind that flows around the wind power generator system has kinetic energy, which is decelerated when it collides against any stationary object and is converted into pressure energy. The radiator 13 obtains a cooling wind volume that passes through the radiator 13 by natural wind, and makes a good use of this effective work.

Similarly, portions which generate high pressure zones by collision of natural wind against the stationary object are present at other portions around the nacelle 6. As a main portion, a connection portion between the nacelle 6 and the tower 7 is given. The connection portion between the nacelle 6 and the tower 7 which is here referred to means a portion at which the tower 7 supports the nacelle 6 (in such a manner that the nacelle 6 can be yaw-rotated). Moreover, the high pressure zone means a zone in which pressure is increased (as compared to the interior of the nacelle 6) by collision of wind against the wind power generator system. In this zone, the space between the tower 7 and the nacelle 6 is present as described above. If a high pressure zone of air is generated at this portion and the pressure becomes higher than air pressure in the nacelle 6, outside air whose pressure has become high flows into the nacelle 6. This inflow of air is not controlled in quality through the outside air introducing system 18 as described above, so that it causes salt and the like to be mixed to the interior of the nacelle 6 and increases risk of corrosion to the devices in the interior of the nacelle.

In contrast, in the first embodiment, the cover 30 is provided on the windward side of the connection portion between the tower 7 and the nacelle 6. The generation of the high pressure zone is avoided and, even if high pressure air is produced, it is made away from the space between the tower 7 and the nacelle 6, so that it is possible to prevent the inflow of the outside air that has been described above. That is, the high pressure zone to be generated on the windward side of the connection portion between the nacelle 6 and the tower 7 can be generated on the windward side of the cover 30, and the high pressure zone can be separated from the space between the nacelle 6 and the tower 7. Thereby, inflow of outside air whose quality is not controlled through the space can be prevented.

Moreover, the cover 30 is rotated together with the nacelle 6. As a result, the cover 30 can be always provided on the windward side with respect to the nacelle 6 that is rotated by yaw control, and wind can be prevented from colliding against the connection portion between the nacelle 6 and the tower 7. Therefore, it is possible to prevent the high pressure zone from being generated at the above-mentioned connection portion, and to avoid the generation of the high pressure zone, and to prevent inflowing of outside air whose quality is not controlled from the space.

Moreover, the end portion 31 of the cover 30 on the downstream side is cut out at the position that is located on the lateral side of the tower 7 with respect to the direction of wind. This is rather for using the generation of a low pressure zone since a flow of air flowing around the column is accelerated at a side surface of the column with respect to the direction of wind. Concretely, in the space between the cover 30 and the tower 7 that is created herein, pressure around the space becomes a negative pressure, thus making it easy to suck air in the nacelle to the outside. Thereby, an effect of avoiding unintended entrance of outside air is increased. In addition, in the case of the wind power generator system in which the outside air introducing system 18 described above is provided together with the cover, an effect of supporting the effect of introducing outside air by the fan 18c can be also expected, so that reduction in fan power can be expected. As a result, high-optimization and miniaturization of the fan can be expected. It is generally known that air flowing around the column is separated on the downstream side which is spaced at about 40 degrees in the left and right direction from the upstream side, as viewed from the center of the column. Therefore, it is preferable that the downstream side end portion 31 of the cover 30 is located on the downstream side relative to this. In other words, the tower 7 has a cylindrical shape and it is preferable that, when the windward direction from a cylindrical center axis of the tower 7 is 0 degree, the cover 30 covers a leeward position of ±40 degrees or more (within a horizontal plane).

Moreover, the cover 30 is provided with respect to the space between the tower 7 and the nacelle 6 as described above, so that the cover 30 is installed on the side of the nacelle 6, and a space which allows the cover to be rotationally moved is provided between the tower 7 and the cover 30. However, if the cover 30 is formed integrally with the nacelle 6, the lower part of the nacelle 6 becomes uneven. Therefore, large-scaled jigs are required for storage and fixing of the cover formed integrally with the nacelle 6, and the integral structure causes interference with assembling operation of the nacelle 6 in a manufacturing facility and constructing of the wind power generator system at an electric power generating site. Therefore, it is preferable that the cover 30 is formed as a separate component with respect to the nacelle 6 and connected to the nacelle 6 at a site at which the wind power generator system is constructed.

As described above, according to the structure of the first embodiment, it is possible to realize the high-reliability wind power generator system in which risk of entering of outside air from the connection portion between the tower 7 and the nacelle 6 is reduced.

### Second Embodiment

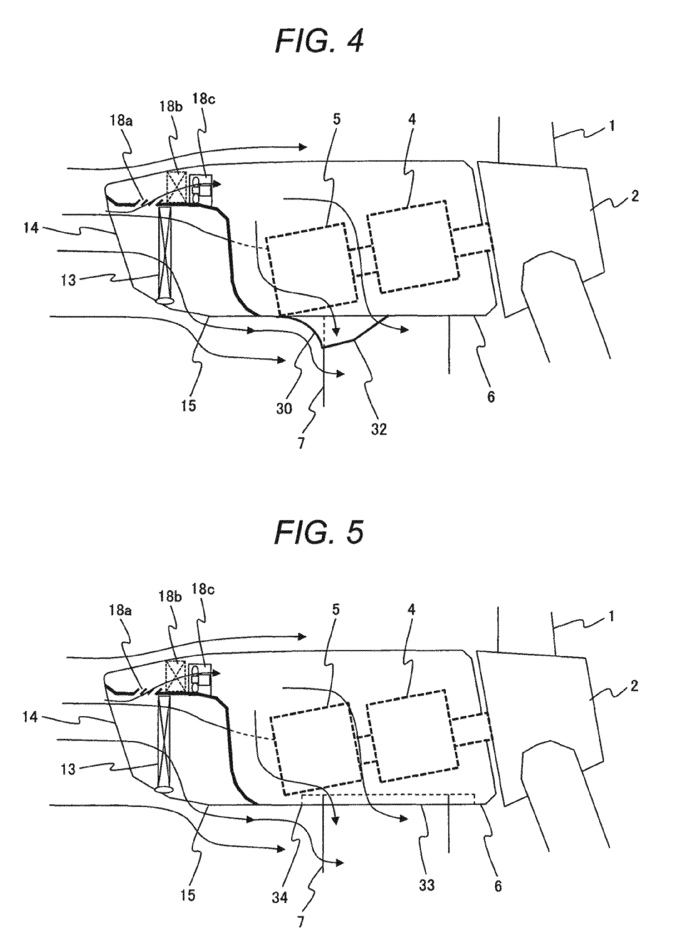

Referring to Fig. 4, a second embodiment of the present invention is explained. Incidentally, a description of an overlap with the above-mentioned first embodiment will be omitted. Fig. 4 is a sectional side view of the part of the nacelle 6 of a wind power generator system according to the second embodiment.

In the second embodiment, a lower part 32 of the cover 30 extends to the lowest position on the upstream side of the direction of wind. This means a state where the lowest end of the cover 30 is located on the windward side relative to the tower 7. By employing such a structure, a space between the cover 30 and the tower 7 at an uppermost stream part of the tower 7 which tends to become a highest-pressure state can be separated (in the height direction) from the space between the nacelle 6 and the tower 7. This is the same as in the first embodiment. Moreover, the cover 30 of this embodiment has such a shape that has a length reduced as it extends to the downstream side, and that gradually rises up. That is, this means a state where the cover gradually rises up as it extends to the windward side relative to the position of a lowermost end of the cover 30. As a result, a negative pressure zone is distributed so as to spread along an oblique region of the cover lower part 32, so that this embodiment can obtain a relatively wide negative pressure zone as compared to the first embodiment. Therefore, a region which allows outside air to enter the nacelle 6 is reduced, and air in the nacelle 6 is made easy to be sucked out of the nacelle 6. As can be also pointed out in the first embodiment, the space between the nacelle 6 and the tower 7 is not covered on the leeward side in this embodiment. While the space is covered on the windward side, the space is not covered on the leeward side, whereby the outside air introducing port 18a and the space between the nacelle 6 and the tower 7 communicate with each other, the interior of the nacelle 6 can be subjected to ventilation and cooling with outside air inflowing from the outside air introducing port 18a, and the outside air introducing port 18a can serves as an exhaust port.

### Third Embodiment

Referring to Fig. 5, a third embodiment of the present invention is explained. Incidentally, a description of an overlap with the above-mentioned embodiments will be omitted.

As described above, the flow of air that is decelerated when collides against the tower 7 generates the high pressure zone, which may be a cause of entrance of outside air into the nacelle 6. In the embodiments 1 and 2, as a countermeasure against this, the cover 30 is provided. In the third embodiment, a disk 33 that is arranged at a top of the tower 7 and has an outer diameter lager than that of the tower 7 (namely, forms a large diameter portion) is provided, and the lower end of the nacelle 6 is disposed in such a manner as to cover an outer side of the disk 33 in the radial direction. The radial direction means a direction substantially perpendicular to a vertically extending direction of the tower 7. Unlike the embodiments 1 and 2, in the third embodiment, the space between the tower 7 and the nacelle 6 is not provided on the wall surface of the tower 7 but is provided between the disk 33 and the nacelle 6. The high pressure zone is generated on the wall surface of the tower 7 on the windward side, against which wind collides. The space 34 between the disk 33 and the tower 7 is separated from the high pressure zone to the upstream side in proportion to the larger outer diameter of the disk 33 than the tower 7 (by a half of the difference in diameter in the case where the disk 33 is concentric circularly arranged with respect to the tower 7 as in this embodiment). Therefore, like the embodiments 1 and 2, the effect of suppressing the flowing of outside air into the nacelle 6 can be expected. The disk 33 is required to have an outer diameter relatively larger than that of the tower 7. However, consideration for manufacturing and constructing, such as formation of the cover 30 as a separate component with respect to the nacelle 6 as has been discussed above in connection with the first embodiment, is not required in the third embodiment. Moreover, the height of the lower end of the nacelle 6 is the same as the height of the lower end of the disk 33 (a strict agreement between them is not always required, and a substantial agreement is permitted). As a result, collision of wind against a windward side surface of the disk 33 located at the space between the nacelle 6 and the tower 7 is avoided, and generation of the high pressure zone can be prevented. Therefore, outside air whose quality is not controlled can be prevented from inflowing from the space. Moreover, the tower 7 of this embodiment has a cylindrical shape and the plate 33 has a disk-shape. The disk 33 is arranged concentric circularly with respect to the tower 7. As a result, the space between the nacelle 6 to be rotated by yaw control, and the tower 7 can be always kept constant, and the space between the nacelle 6 and the tower 7 can be always maintained separated from the high pressure zone that is generated at the connection portion between the nacelle 6 and the tower 7. That is, the disk 33 of a flange-shape is installed on the top end of the tower 7 without provision of the cover 30, whereby the separation of the space between the nacelle 6 and the tower 7 from the high pressure zone is realized, or entrance of outside air into the nacelle is prevented. In order that workers can come and go between the interior of the nacelle 6 and the interior of the tower 7, the disk 33 is preferably formed into a substantially ring-shape whose center has an opening. The opening communicates with the nacelle 6 and the tower 7. Even if a structure in which the disk 33 and the tower are integrally formed, namely, a diameter of the top or uppermost part of the tower which is enlarged, is employed, or a structure in which the top or uppermost part of the tower which is formed into a trumpet-shape is employed, the above-mentioned effect can be expected. That is, it is possible to employ both a structure in which a plate-shaped member formed as a separate component with respect to the tower 7 is provided, and a structure in which a portion whose diameter is enlarged is formed integrally with the top or uppermost part of the tower 7. In other words, it is sufficient that an enlarged diameter portion whose outer diameter is larger than that of a portion of the tower 7 which is located below the top of the tower 7 is provided at the top of the tower 7, and that the lower end of the nacelle 6 is arranged in such a manner as to cover an outer side of the enlarged diameter portion in the radial direction.

While the embodiments of the present invention have been described above, the embodiments are merely examples and do not limit the technical scope of the present invention. The effect of the present invention can be expected particularly in the downwind-type wind power generator system in which natural wind directly collides against the tower before passing the rotor, so that such downwind-type wind power generator systems have been positively taken as examples in the foregoing description. However, even in an upwind-type wind power generator system in which the rotor is arranged on the upstream side of the nacelle, a certain effect can be expected. The upwind-type wind power generator systems are included in the technical scope of the present invention.

Although the generators and the speed increasers are employed as the devices to be provided in the nacelles of the embodiments according to the present invention, devices (for example, control units) that may be subjected to corrosion in the nacelle or the tower are also included in the devices.

Moreover, the wind power generator system provided with the outside air introducing system has been taken as an example in the foregoing description. However, naturally, even in a wind power generator system which is not adapted to introduce outside air, there is a need for avoiding unintentional inflowing of outside air into the nacelle. Therefore, even if the present invention is applied to such a wind power generator system, of course, a certain effect can be expected.

According to the present invention, it is possible to realize a high reliability wind power generator system in which outside air whose quality is not controlled is prevented from inflowing from an unintentional space portion, and risk of corrosion is reduced.

### Reference Signs List

- 1: Blade
- 2: Rotor
- 3: Main shaft
- 4: Speed increaser
- 5: Generator
- 6: Nacelle
- 7: Tower
- 8: Power converter
- 9: Transformer
- 10: Foundation
- 12: Sea level
- 13: Radiator
- 14: Inlet port
- 15a: Exhaust port (Nacelle undersurface)
- 15b: Exhaust port (Nacelle side surface)
- 18: Outside air introducing system
- 18a: Outside air introducing port
- 18b: Salt damage-preventing filter
- 18c: Fan
- 30: Cover
- 31: Downstream side end portion of cover
- 32: Lower side end portion of cover
- 33: Disk at tower upper part
- 34: Space between disk and nacelle

## Claims

1. A wind power generator system comprising:
a nacelle adapted to rotate according to a direction of wind;
a tower rotatably supporting the nacelle,
wherein a space between the nacelle and the tower is separated from high pressure zones that are generated at a connection portion between the nacelle and the tower and on the windward side of the tower.

2. The wind power generator system according to claim 1, further including a cover that is disposed on the windward side of the tower and covers the space between the nacelle and the tower.

3. The wind power generator system according to claim 2, wherein the cover is formed as a separate component with respect to the nacelle and adapted to rotate together with the nacelle.

4. The wind power generator system according to claim 2 or 3, wherein the tower has a cylindrical shape and, when a windward direction from a cylindrical center axis of the tower is 0 degree, the cover is adapted to cover a leeward position of ±40 degrees or more.

5. The wind power generator system according to any one of claims 2 to 4, wherein a lowermost end of the cover is located on the windward side relative to the tower.

6. The wind power generator system according to claim 5, wherein the cover rises up as it extends to the leeward side from the position of the lowermost end of the cover.

7. The wind power generator system according to any one of claims 2 to 6, wherein the space between the nacelle and the tower is not covered on the leeward side with the cover.

8. The wind power generator system according to claim 1, wherein an enlarged diameter portion is provided at a top of the tower, the enlarged diameter portion having an outer diameter larger than that of a portion of the tower which is located below the top of the tower, and
a lower end of the nacelle is arranged in such a manner as to cover an outer side of the enlarged diameter portion in the radial direction.

9. The wind power generator system according to claim 8, wherein a height of the lower end of the nacelle is the same as a height of a lower end of the enlarged diameter portion.

10. The wind power generator system according to claim 8 or 9, wherein the tower has a cylindrical shape, and
the enlarged diameter portion has a disk-shape, and is concentric circularly arranged with respect to the tower.

11. The wind power generator system according to any one of claims 8 to 10, wherein the enlarged diameter portion has an opening that communicates with the nacelle and the tower.

12. The wind power generator system according to any one of claims 1 to 11, including an outside air introducing means that introduces outside air into the nacelle.

13. The wind power generator system according to claim 12, wherein the outside air introducing means is an introducing port that is provided at a portion of the nacelle on the windward side and communicates with the interior and exterior of the nacelle.

14. The wind power generator system according to claim 13, further including a filter provided on the leeward side of the introducing port for removing salt.

15. The wind power generator system according to claim 13 or 14, further including a fan provided on the leeward side of the introducing port.
